# EUROPEAN PATENT APPLICATION

(11) **EP 4 738 584 A1**
(43) Date of publication of application: **06.05.2026**
(21) Application number: 24941997.9
(22) Date of filing: 12.12.2024
(51) Int. Cl.: H01M 50/308, H01M 50/291, H01M 50/249, H01M 50/204

(54) **BATTERY PACK**

(30) Priority: 30.05.2024 KR 20240070922
(71) Applicant: LG Energy Solution, Ltd., Seoul 07335 (KR)
(72) Inventor: PARK, Shin-Young, Daejeon 34122 (KR); KANG, Jong-Mo, Daejeon 34122 (KR); RO, Yong-Hwan, Daejeon 34122 (KR); MUN, Jeong-O, Daejeon 34122 (KR); SEO, Sung-Won, Daejeon 34122 (KR); LEE, Sang-Joon, Daejeon 34122 (KR); HWANG, Tae-Won, Daejeon 34122 (KR)
(74) Representative: Plasseraud IP
(86) International application number: PCT/KR2024/096859
(87) International publication number: WO 2025/249691

(57) **Abstract**

Disclosed is a battery pack. The battery pack includes a case providing an inner space and having a pack cover; a battery cell positioned inside the case; a partition wall configured to partition the inner space of the case; an adhesive member disposed on the partition wall; and a bolt having a head attached to the adhesive member and a body penetrating the pack cover.

## Description

### TECHNICAL FIELD

The present disclosure relates to a battery pack.

The present application claims priority to Korean Patent Application No. 10-2024-0070922 filed on May 30, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs within one battery module, the thermal runaway needs to be prevented from propagating to other battery modules or other battery cells. If the propagation of thermal runaway between battery modules or battery cells is not properly prevented, an event occurring in a specific battery module or battery cell may cause a thermal chain reaction in other battery modules or other battery cells, which may cause an explosion or fire or enlarge the scale thereof.

In particular, when an event such as thermal runaway occurs in one battery module, gas or flame may be randomly discharged to the outside. At this time, if the discharge of gas or flame is not properly controlled, the gas or flame may be discharged toward other battery modules, which may cause a thermal chain reaction in other battery modules. In particular, a module terminal may exist on the front side of the battery module, and a configuration, such as a module bus bar, may exist for electrical connection with other battery modules or battery packs. Accordingly, if flame is discharged to the front side of the battery module, the module terminals may be damaged and an electrical short may occur within the battery pack. In addition, since other battery modules may exist on the front side of the battery module, if flame is discharged to the front side of a specific battery module, the discharged flame may be directed to other battery modules, which may easily cause a fire to spread between battery modules.

If the thermal propagation between battery modules or battery cells are not properly controlled, it may result in a sudden voltage drop in the battery module or battery pack. This may cause a sudden shutdown of the device equipped with the battery module or battery pack, resulting in unexpected damage. For example, if a sudden voltage drop in the battery pack occurs while an electric vehicle is in operation, there is no time to move the electric vehicle to a safe location.

Moreover, if a fire or explosion occurs suddenly due to failure to properly control thermal propagation between battery modules or battery cells, there is a high possibility of causing casualties to users. For example, if thermal runaway occurs in an electric vehicle, if a certain amount of time is not secured before it progresses to a full-blown fire, the occupants may not be able to escape safely.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure that facilitates expansion of the inner space of a battery pack when a thermal event occurs.

In addition, the present disclosure is directed to providing a structure that allows the pack cover to easily inflate when a thermal event occurs.

In addition, the present disclosure is directed to providing a structure in which the seal is maintained when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing an inner space and having a pack cover; a battery cell positioned inside the case; a partition wall configured to partition the inner space of the case; an adhesive member disposed on the partition wall; and a bolt having a head attached to the adhesive member and a body penetrating the pack cover.

In addition, the battery pack may further comprise a nut located at an outer side of the pack cover and fastened to the bolt.

In addition, the pack cover may be in contact with the head.

In addition, the head may be configured to separate from the partition wall when a thermal event occurs.

In addition, the partition wall may have an accommodation groove formed at a top end, and the adhesive member may be disposed in the accommodation groove.

In addition, the head may have a through hole, and the adhesive member may be filled in the through hole.

In addition, the battery pack may further comprise a stopper attached to an upper surface of the head and configured to cover the through hole.

In addition, the battery pack may further comprise a gasket disposed between the head and the pack cover.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the discharge of the gas or flame may be appropriately controlled.

According to at least one of the embodiments of the present disclosure, the electrical safety of the battery pack may be improved.

According to at least one of the embodiments of the present disclosure, the sealing of the battery pack may be maintained even when a thermal event occurs.

According to at least one of the embodiments of the present disclosure, when a thermal event occurs, the inner space of the battery pack expands, thereby preventing an explosion of the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a diagram showing a battery module of FIG. 2.
FIG. 4 is a diagram showing the battery module of FIG. 3, in which some components are exploded.
FIG. 5 is a diagram showing some components of the battery pack of FIG. 2.
FIG. 6 is a partial cross-sectional view taken along the cutting line A-A' of FIG. 1.
FIG. 7 is a cross-sectional view taken along the cutting line B-B' of FIG. 6.
FIG. 8 is a partial cross-sectional view taken along the cutting line A-A' of FIG. 1.
FIG. 9 is a drawing showing the change in FIG. 8 when a thermal event occurs.
FIG. 10 is a partial cross-sectional view according to a modified embodiment taken along the cutting line A-A' of FIG. 1.
FIG. 11 is a drawing showing the change in FIG. 10 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

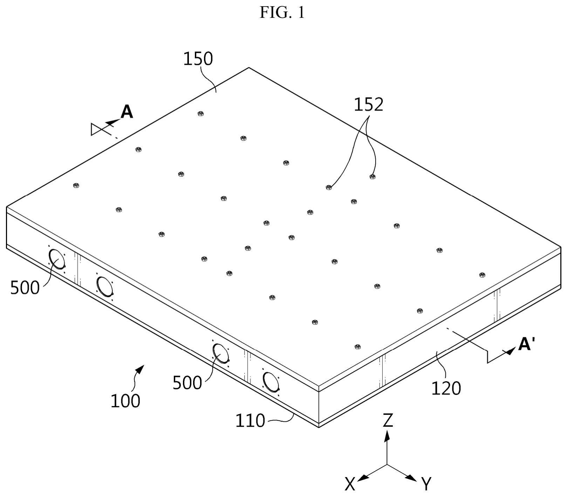

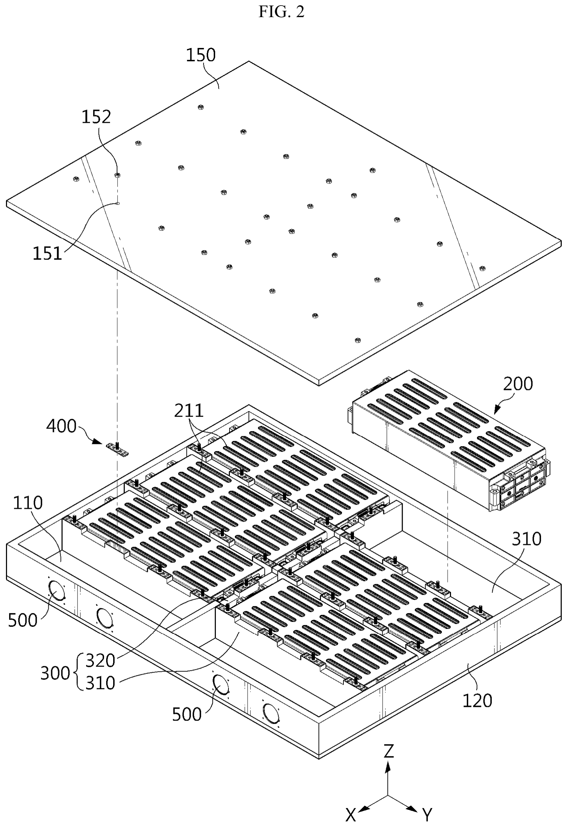

FIG. 1 is a diagram showing a battery pack according to an embodiment of the present disclosure. FIG. 2 is a diagram showing the battery pack of FIG. 1, in which some components are exploded.

Referring to FIGS. 1 and 2, the battery pack according to an embodiment of the present disclosure may include a case 100, a battery cell, a partition wall 300, an adhesive member 302, and a bolt 400. The case 100 may include a base plate 110, a side wall 120, and a pack cover 150. The base plate 110 may have a rectangular shape. The base plate 110 may have a flat shape. The base plate 110 may form an outer appearance of the battery pack. The base plate 110 may provide an inner space of the battery pack.

The side wall 120 may be installed, fastened, coupled, fixed or attached to the upper surface of the base plate 110. The side wall 120 may be composed of four pieces. The side wall 120 may be arranged along the periphery of the base plate 110. The side wall 120 may form the outer appearance of the battery pack. The side wall 120 may provide an inner space.

The pack cover 150 may have a rectangular plate shape. The pack cover 150 may have a flat plate shape. The pack cover 150 may form the outer appearance of the battery pack. The pack cover 150 may cover the inner space of the battery pack.

The battery cell 220 may mean a secondary battery. In particular, the battery cell 220 may be a pouch-type secondary battery. However, the shape of the battery cell 220 is not limited to a pouch shape, and may have various shapes such as a cylindrical shape or a rectangular parallelepiped shape. The battery cell 220 may be provided in plurality.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack. The battery cell 220 may be positioned in the space partitioned by the partition wall 300.

The adhesive member 302 may be disposed on the partition wall 300. Also, the adhesive member 302 may be positioned at the top end of the partition wall 300. The adhesive member 302 may be configured to melt by being exposed to high temperature when a thermal event occurs.

The bolt 400 may have a head 410 and a body 430. The head 410 may be attached to the adhesive member 302. The head 410 may have a rectangular plate shape. Since the head 410 has a rectangular shape, the bonding area with the partition wall 300 may be increased. The head 410 may be fixed, coupled, attached, or installed to the partition wall 300 through the adhesive member 302. The body 430 may protrude upward or in the +Z-axis direction from the head 410. The head 410 and the body 430 may be formed integrally. The body 430 may have a thread. In addition, the body 430 may penetrate the pack cover 150.

According to this configuration of the present disclosure, the thermal safety of the battery pack may be improved. When a thermal event occurs from the battery cell 220, a venting gas g may be discharged. As a result, the pressure inside the battery pack may rapidly increase. At this time, the adhesive member 302 may melt due to the temperature of the venting gas g. As a result, the bolt 400 and the partition wall 300 may be separated. In addition, as the pack cover 150 swells outward, the space inside the battery pack may be expanded. As a result, an explosion of the battery pack may be prevented.

Referring to FIGS. 1 and 2, the battery pack according to an embodiment of the present disclosure may include a nut 152. The nut 152 may be located on the outer side of the pack cover 150. Also, the nut 152 may be fastened with the bolt 400. The nut 152 may be coupled to the thread of the body 430. The pack cover 150 may have a fastening hole 151. The body 430 may penetrate the fastening hole 151. Also, the nut 152 may be located on the pack cover 150 and coupled with the body 430. The nut 152 may seal the fastening hole 151.

According to this configuration of the present disclosure, the thermal safety of the battery pack may be improved. Even if the bolt 400 and the partition wall 300 are separated when a thermal event occurs, the fastening hole 151 may be maintained in a sealed state due to the coupling of the nut 152 and the body 430. As a result, high-temperature gas or flame generated inside the battery pack may not be discharged to the outside.

In addition, according to this configuration of the present disclosure, oxygen from outside the battery pack may be blocked from flowing in through the fastening hole 151. As a result, thermal events may be blocked from propagating inside the battery pack.

Referring to FIGS. 1 and 2, the battery pack according to an embodiment of the present disclosure may include a plurality of bolts 400. The plurality of bolts 400 may be arranged along a longitudinal direction of the partition wall 300. A first partition wall 310 may extend along the right and left direction or the Y-axis direction. A second partition wall 320 may extend along the front and rear direction or the X-axis direction. The plurality of bolts 400 may be arranged along the longitudinal direction of the first partition wall 310 or the longitudinal direction of the second partition wall 320.

According to this configuration of the present disclosure, the thermal safety of the battery pack may be improved. Since the plurality of bolts 400 are coupled along the partition wall 300, the pack cover 150 may be stably coupled. In addition, when a thermal event occurs, the pack cover 150 may swell as a whole.

Referring to FIGS. 1 and 2, the battery pack according to an embodiment of the present disclosure may include a venting device 500. The venting device 500 may be installed on the side wall 120. For example, the venting device 500 may be installed on the side wall 120 at the front side. For example, the venting device 500 may be a gas valve. The venting device 500 may open when the pressure inside the case 100 increases to discharge gas. In addition, the venting device 500 may block external air from flowing into the case 100. The venting device 500 may be provided in plurality.

According to this configuration of the present disclosure, the thermal safety of the battery pack may be improved. When a thermal event occurs from the battery cell 220, the pressure inside the battery pack may rapidly increase. Due to the decoupling of the bolt 400 and the partition wall 300, the pack cover 150 swells outward, and the venting gas g is discharged to the outside through the venting device 500, thereby preventing an explosion of the battery pack.

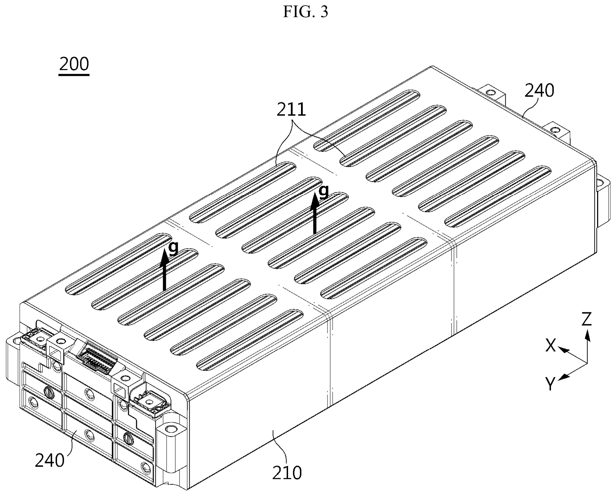

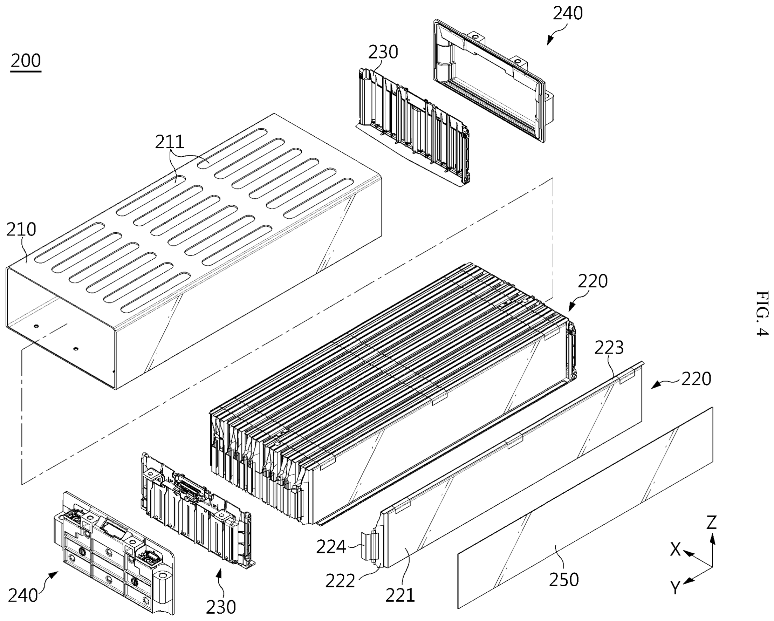

FIG. 3 is a diagram showing a battery module 200 of FIG. 2. FIG. 4 is a diagram showing the battery module 200 of FIG. 3, in which some components are exploded. Referring to FIGS. 1 to 4, the battery pack according to an embodiment of the present disclosure may include a plurality of battery modules 200. The battery module 200 may include a module case 210, a plurality of battery cells 220, a pad 250, a bus bar frame assembly 230, and an end cover 240.

The module case 210 may have a rectangular parallelepiped shape. The module case 210 may also be referred to as a frame 210. The module case 210 may provide a space therein. The module case 210 may have a top plate, a bottom plate, and a pair of side plates. In addition, the module case 210 may have a shape in which the front and rear surfaces are open. The case 100 may have a venting hole 211 in the top plate. The venting hole 211 may communicate the inside and the outside of the module case 210.

The battery cell 220 may be accommodated inside the module case 210. The plurality of battery cells 220 may be stacked along the front and rear direction or the X-axis direction. The battery cell 220 may include an accommodation portion 221 accommodating an electrode assembly, a first sealing portion 222 protruding leftward and rightward from the accommodation portion 221, and a second sealing portion 223 protruding upward from the accommodation portion 221. In addition, the battery cell 220 may include electrode leads 224 protruding leftward and rightward from the first sealing portion 222, respectively. Each battery cell 220 may extend along the right and left direction or the Y-axis direction. The electrode leads 121 may protrude leftward and rightward from each battery cell 220.

The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the front and rear direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The bus bar frame assembly 230 may be provided on the left and right sides of the plurality of battery cells 220, respectively. The bus bar frame assembly 230 may be electrically connected to the electrode leads 121 of the plurality of battery cells 220.

The pair of end covers 240 may be coupled to the left and right sides of the module case 210, respectively. The pair of end covers 240 may cover the front and rear sides of the module case 210. The end covers 240 may have a rectangular shape.

The battery module 200 may be installed, fastened, coupled, fixed, or attached to the upper surface of the base plate 110. When a thermal event occurs from the battery module 200, the venting gas g may be discharged through the venting hole 211. The venting hole 211 may face the inner surface of the pack cover 150. The venting gas g discharged through the venting hole 211 may push the pack cover 150 outward, upward, or in the Z-axis direction.

The battery module 200 may be located in the space partitioned by the partition wall 300. Also, the partition wall 300 may face at least one side of the battery module 200.

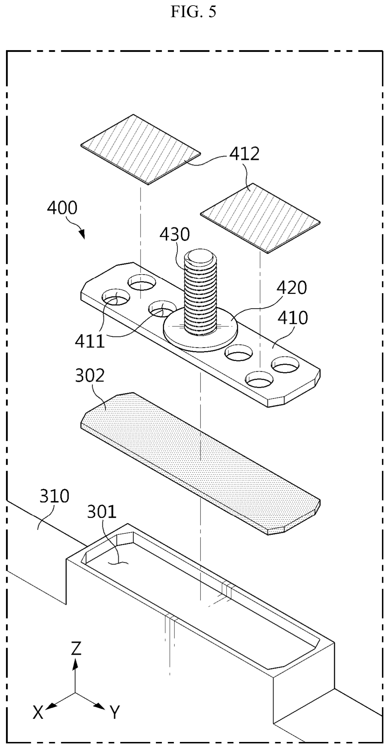

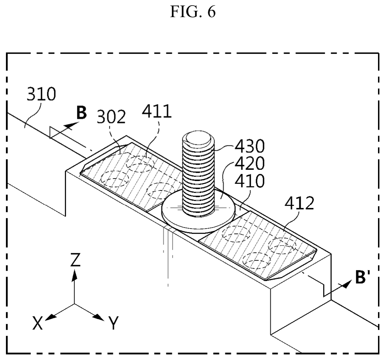

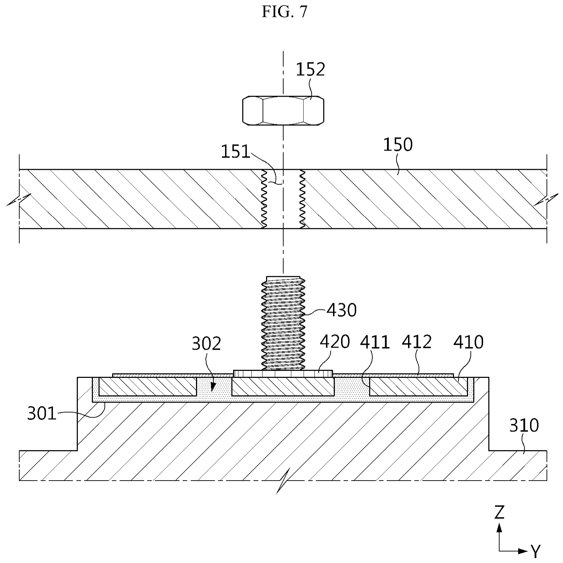

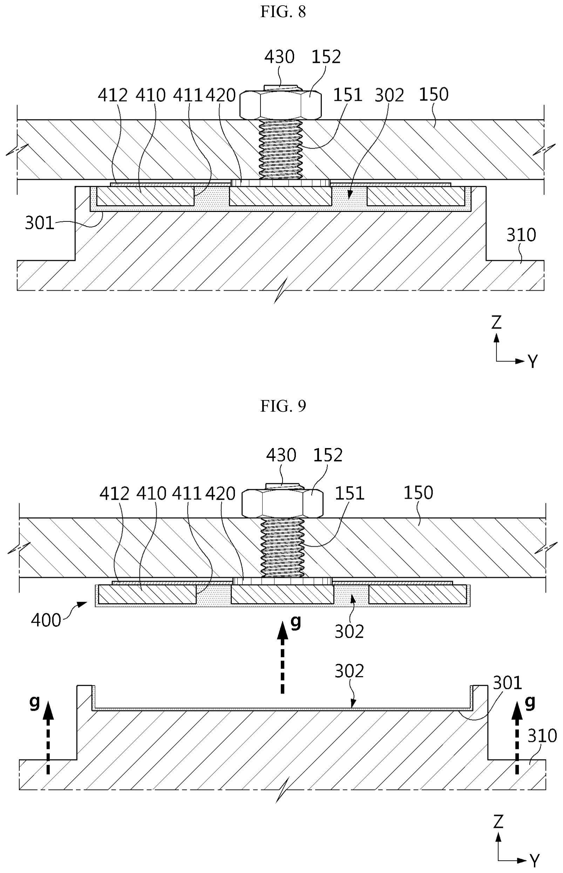

FIG. 5 is a diagram showing some components of the battery pack of FIG. 2. FIG. 6 is a partial cross-sectional view taken along the cutting line A-A' of FIG. 1. FIG. 7 is a cross-sectional view taken along the cutting line B-B' of FIG. 6. FIG. 8 is a partial cross-sectional view taken along the cutting line A-A' of FIG. 1.

Referring to FIGS. 5 to 8, the pack cover 150 according to an embodiment of the present disclosure may be in contact with the upper surface of the head 410. The head 410 may further include a connection portion 420. The connection portion 420 may be formed at the periphery of the body 430. The connection portion 420 may improve the rigidity of a portion where the head 410 and the body 430 are connected. The pack cover 150 may be fixed, coupled, fastened, or installed between the head 410 and the nut 152. The pack cover 150 may be in close contact with the head 410 or the nut 152. In addition, the pack cover 150 may be in close contact with the connection portion 420.

According to this configuration of the present disclosure, the thermal stability of the battery pack may be improved. The pack cover 150 may be stably coupled to the partition wall 300, and the fastening hole 151 may be sealed.

Referring to FIGS. 5 to 8, the partition wall 300 of the battery pack according to an embodiment of the present disclosure may have an accommodation groove 301 at the top end. The accommodation groove 301 may be configured to have a depth in the downward direction or the -Z-axis direction. Also, the adhesive member 302 may be disposed in the accommodation groove 301. For example, the accommodation groove 301 may have a depth of about 1 mm. In addition, the accommodation groove 301 may have a shape corresponding to the shape of the head 410. In addition, the head 410 may be accommodated in the accommodation groove 301.

According to this configuration of the present disclosure, the assembly tolerance of the battery pack may be reduced. Due to the accommodation groove 301, the application amount of the adhesive member 302 may be precisely controlled. Due to this, the deviation in the height of each bolt 400 after the plurality of bolts 400 are attached to the partition wall 300 may be reduced. In addition, by coupling the pack cover 150 to the plurality of bolts 400, the assembly tolerance of the battery pack may be reduced.

Referring to FIGS. 5 to 8, the head 410 of the battery pack according to an embodiment of the present disclosure may have a through hole 411. Also, the adhesive member 302 may be filled in the through hole 411. The through hole 411 may be provided in plurality. In addition, the plurality of adhesive members 302 may be filled in the through holes 411, respectively.

According to this configuration of the present disclosure, since the adhesive member 302 is filled in the through hole 411, the bolt 400 may be more strongly attached to the partition wall 300. As a result, even if vibration or shock is applied to the battery pack, the pack cover 150 and the partition wall 300 may stably maintain a coupled state.

Referring to FIGS. 5 to 8, the battery pack according to an embodiment of the present disclosure may further include a stopper 412. The stopper 412 may be attached, coupled, or fixed to the upper surface of the head 410. The stopper 412 may have a sheet shape with a thin thickness. For example, the stopper 412 may be a tape. The stopper 412 may cover the through hole 411. In addition, the stopper 412 may be provided in plurality. In addition, the stopper 412 may cover the plurality of through holes 411.

According to this configuration of the present disclosure, the assembly tolerance of the battery pack may be reduced. The stopper 412 can limit the maximum amount of the adhesive member 302 filled into the through hole 411. The stopper 412 may prevent the adhesive member 302 from being filled to overflow the through hole 411. As a result, the application amount of the adhesive member 302 may be precisely controlled. As a result, after the plurality of bolts 400 are attached to the partition wall 300, the deviation in the height of each bolt 400 may be reduced. In addition, by coupling the pack cover 150 to the plurality of bolts 400, the assembly tolerance of the battery pack may be reduced.

In addition, according to this configuration of the present disclosure, the pack cover 150 and the bolt 400 may be stably fastened. The stopper 412 prevents the adhesive member 302 from overfilling the through hole 411, so that the pack cover 150 may be stably in close contact with the head 410.

FIG. 9 is a drawing showing the change in FIG. 8 when a thermal event occurs. Referring to FIGS. 8 and 9, the head 410 of the battery pack according to an embodiment of the present disclosure may be configured to separate from the partition wall 300 when a thermal event occurs. When a thermal event occurs, the adhesive member 302 may melt due to high temperature gas. As a result, the head 410 may be separated from the partition wall 300. In addition, the pack cover 150 may expand upward, outward, or in the +Z-axis direction. Even if the pack cover 150 expands, the sealing of the fastening hole 151 may be maintained.

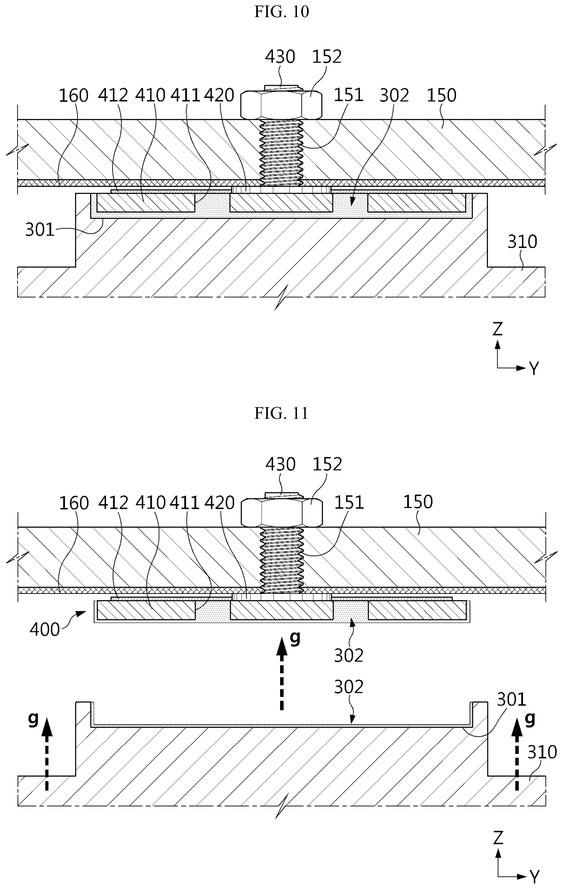

FIG. 10 is a partial cross-sectional view according to a modified embodiment taken along the cutting line A-A' of FIG. 1. FIG. 11 is a drawing showing the change in FIG. 10 when a thermal event occurs. Referring to FIGS. 10 and 11, the battery pack according to an embodiment of the present disclosure may further include a gasket 160. The gasket 160 may be disposed between the head 410 and the pack cover 150. The gasket 160 may contain a highly ductile metal material. The gasket 160 may be compressively deformed between the head 410 and the pack cover 150. In addition, the gasket 160 may seal between the pack cover 150 and the head 410.

According to this configuration of the present disclosure, the thermal safety of the battery pack may be improved by sealing the pack cover 150 and the head 410.

In addition, according to this configuration of the present disclosure, the assembly tolerance of the battery pack may be reduced. Due to the adhesive member 302, a deviation in the height of each bolt 400 may occur after the plurality of bolts 400 are attached to the partition wall 300. At this time, since the gasket 160 is positioned between the pack cover 150 and the head 410, the pack cover 150 may be stably fastened, coupled, or fixed to the partition wall 300.

In addition, the battery pack according to the present disclosure may further include various components, for example components of the battery pack known at the time of filing of this application, such as a BMS, a bus bar, a relay, a current sensor, etc. in addition to the battery module.

The battery pack according to the present disclosure may be applied to vehicles such as electric vehicles or hybrid vehicles. That is, the vehicle according to the present disclosure may include the battery pack according to the present disclosure described above. In addition, the vehicle according to the present disclosure may further include various other components included in the vehicle in addition to the battery pack. For example, the vehicle according to the present disclosure may further include a body, a motor, and control devices such as an ECU (electronic control unit).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing an inner space and having a pack cover;
a battery cell positioned inside the case;
a partition wall configured to partition the inner space of the case;
an adhesive member disposed on the partition wall; and
a bolt having a head attached to the adhesive member and a body penetrating the pack cover.

2. The battery pack according to claim 1, further comprising:
a nut located at an outer side of the pack cover and fastened to the bolt.

3. The battery pack according to claim 1,
wherein the pack cover is in contact with the head.

4. The battery pack according to claim 1,
wherein the head is configured to separate from the partition wall when a thermal event occurs.

5. The battery pack according to claim 1,
wherein the partition wall has an accommodation groove formed at a top end, and
wherein the adhesive member is disposed in the accommodation groove.

6. The battery pack according to claim 1,
wherein the head has a through hole, and
wherein the adhesive member is filled in the through hole.

7. The battery pack according to claim 6, further comprising:
a stopper attached to an upper surface of the head and configured to cover the through hole.

8. The battery pack according to claim 1, further comprising:
a gasket disposed between the head and the pack cover.

9. A vehicle comprising the battery pack according to any one of claims 1 to 8.
